# EUROPÄISCHE PATENTSCHRIFT

(11) **EP 1 563 199 B1**
(45) Veröffentlichungstag und Bekanntmachung des Hinweises auf die Patenterteilung: **13.02.2008**
(21) Anmeldenummer: 03811352.8
(22) Anmeldetag: 24.10.2003
(51) Int. Cl.: F16D 47/06

(54) **ANFAHREINHEIT UND GETRIEBEBAUEINHEIT MIT EINER ANFAHREINHEIT**
STARTING UNIT AND GEARBOX UNIT WITH A STARTING UNIT
UNITE DE DEMARRAGE ET UNITE DE BOITE DE VITESSES POURVUE DE LADITE UNITE DE DEMARRAGE

(30) Priorität: 18.11.2002 DE 10253838
(43) Veröffentlichungstag der Anmeldung: 17.08.2005
(73) Patentinhaber: Voith Turbo GmbH & Co. KG, 89522 Heidenheim (DE)
(72) Erfinder: MENNE, Achim, 74564 Crailsheim (DE)
(74) Vertreter: Dr. Weitzel & Partner
(86) Internationale Anmeldenummer: PCT/EP2003/011766
(87) Internationale Veröffentlichungsnummer: WO 2004/046574

(56) Entgegenhaltungen:
- EP-A- 0 162 253
- WO-A-02/18818
- CH-A- 682 689
- DE-A- 10 104 813
- DE-C- 677 927
- GB-A- 285 970
- GB-A- 787 683
- GB-A- 889 598
- GB-A- 1 243 616
- US-A- 4 629 042

## Beschreibung

Die Erfindung betrifft eine Anfahreinheit, insbesondere für den Einsatz in Schaltgetrieben, automatisierten Schaltgetrieben oder Automatgetrieben in Antriebssystemen, insbesondere für den Einsatz in Fahrzeugen, im Einzelnen mit den Merkmalen aus dem Oberbegriff des Anspruches 1; ferner eine Getriebebaueinheit.

Getriebe für den Einsatz in Fahrzeugen, insbesondere in Form von Schaltgetrieben oder automatisierten Schaltgetrieben sind in einer Vielzahl von Ausführungen bekannt. Diesen gemeinsam ist, daß der Anfahrvorgang über ein Kupplungselement - bei automatisierten Schaltgetrieben in der Regel eine Reibkupplung oder bei automatischen Getrieben ein hydrodynamischer Wandler - realisiert wird. Ausführungen mit einer hydrodynamischen Kupplung sind beispielsweise aus der Druckschrift WO 00/55527 bekannt. Bei Ausführungen mit Anfahrelementen in Form hydrodynamisch übertragender Baueinheiten wird aufgrund der Eigenschaft dieser Bauelemente, welche lediglich in einem bestimmten Betriebsbereich mit optimalen bzw. vertretbaren Wirkungsgrad arbeiten, eine mechanische Durchkupplung beziehungsweise Umgehung des hydrodynamischen Leistungszweiges angestrebt. Dies erfolgt in der Regel über sogenannte Überbrückungskupplungen, welche dabei eine Triebverbindung zwischen einem Eingang der Anfahreinheit und einem Ausgang unter Umgehung des hydrodynamischen Leisturigszweiges vorsehen. Dabei kann die Überbrückungskupplung in Form von Lamellenkupplung parallel zum hydrodynamischen Bauelement geschaltet werden. Als Überbrückungskupplung finden dabei in der Regel reibschlüssig arbeitende Kupplungen in Form von Lamellenkupplungen Verwendung. Systembedingt arbeitet diese jedoch beim Übergang der Leistungsübertragung über das hydrodynamische Bauelement zur mechanischen Durchkupplung mit Schlupf. Dies bewirkt, daß beispielsweise bei vollständiger Entleerung des hydrodynamischen Bauelementes und der Kupplung zwischen dem Eingang und dem Ausgang des Anfahrelementes zeitweise zu Bereichen, in denen eine Leistungsübertragung nur unbefriedigend erfolgt und die an der Leistungsübertragung beteiligten Elemente aufgrund der erhöhten Beanspruchung im Schlupfzustand einer erhöhten Belastung unterworfen sind.

Zur Lösung dieses Problems ist aus der Druckschrift DE 101 04 813 A1 eine Anfahreinheit bekannt, für welche die Überbrückungskupplung als mechanisch übertragende synchronschaltbare Kupplung ausgeführt ist. Bei dieser handelt es sich systembedingt um eine mit Formschluss arbeitende Kupplung. Diese ermöglicht bei Synchronisation zwischen den beiden miteinander zu koppelnden Elementen - Eingang und Ausgang der Anfahreinheit, welche jeweils mit dem Primärrad oder dem Sekundärrad der hydrodynamischen Kupplung verbunden sind - eine absolut verschleißfreie Lösung, da Schlupfzustände beim Übergang von der hydrodynamischen Leistungsübertragung zur mechanischen Leistungsübertragung und während der mechanischen Leistungsübertragung sowie während aller Betriebsfahrten des Gesamtbetriebs der Anfahreinheit lediglich durch die Schlupfzustände im Bereich der hydrodynamischen Leistungsübertragung charakterisiert sind. Die Synchronisation erfolgt dabei durch Absenken der Motordrehzahl. Ein wesentlicher Nachteil dieser Lösung besteht jedoch darin, dass zum einen entweder eine sehr genaue und feinfühlige Absenkung der Motordrehzahl erfolgen muss, sowie eine genaue Festlegung des Schaltzeitpunktes, um absolut verschleißfrei arbeiten zu können, da der Schaltvorgang in der Regel nur bei der entsprechenden Zueinanderstellung der Mitnahmeelemente erfolgen kann.

Die Druckschrift US-A-4 629 042 offenbart eine gattungsgemäße Anfahreinheit für den Einsatz in Getrieben, insbesondere automatischen oder automatisierten Schaltgetrieben mit einem Eingang und einem Ausgang sowie mit einem zwischen dem Eingang und dem Ausgang angeordneten Anfahrelement in Form einer hydrodynamischen Kupplung. Diese umfasst mindestens ein Primärrad und ein Sekundärrad, wobei die hydrodynamische Kupplung frei von einem Leitrad ist. Ferner ist eine Überbrückungskupplung zur mechanischen Durchkopplung zwischen Eingang und Ausgang vorgesehen. Die Überbrückungskupplung ist als mechanisch übertragende synchron schaltbare Kupplung ausgeführt. Ferner ist ein Freilauf zwischen dem Primärrad und dem Sekundärrad vorgesehen. Ein wesentliches Problem stellt jedoch die Synchronisation bei Einlegung der synchron schaltbaren Überbrückungskupplung dar, welche durch zusätzliche Maßnahmen realisiert wird.

Es sind ferner Lösungen bekannt, die mit Ausführungen der Überbrückungskupplung in Form von Zahnkupplungen arbeiten, wobei für diese die gleiche Problematik gilt. Diesbezüglich wird beispielsweise auf EP 0 162 253 verwiesen.

Der Erfindung liegt daher die Aufgabe zugrunde, eine Möglichkeit der Realisierung einer mechanischen Durchkupplung zwischen dem Eingang und dem Ausgang einer Anfahreinheit zur Umgehung der Leistungsübertragung über das hydrodynamische Bauelement derart weiterzuentwickeln, dass diese Lösung nahezu verschleißfrei arbeitet, wobei der konstruktive sowie steuerungstechnische Aufwand möglichst gering gehalten werden soll.

Die erfindungsgemäße Lösung ist durch die Merkmale des Anspruches 1 charakterisiert. Vorteilhafte Ausgestaltungen sind in den Unteransprüchen wiedergegeben.

Erfindungsgemäß umfasst eine Anfahreinheit ein Anfahrelement in Form einer hydrodynamischen Kupplung und eine Überbrückungskupplung, die parallel schaltbar sind, wobei die Überbrückungskupplung als mechanisch übertragende synchronschaltbare Kupplung ausgeführt ist und diese systembedingt als eine mit Formschluss arbeitende Kupplung ausgeführt ist. Einen zwischen Primärrad und Sekundärrad angeordneten Freilauf, welcher bei Leistungsübertragung vom Eingang zum Ausgang frei und bei Leistungsübertragung vom Ausgang zum Eingang sperrt. Zur Vereinfachung der Synchronisation zwischen den beiden miteinander zu koppelnden Elementen - Eingang und Ausgang - der Anfahreinheit, welche jeweils mit dem Primärrad oder dem Sekundärrad einer hydrodynamischen Kupplung verbunden sind, sind der Freilauf hinsichtlich seiner miteinander in Wirkverbindung tretenden Elemente und die Überbrückungskupplung, insbesondere die einzelnen in Wirkverbindung miteinander bringbaren Mitnahmeelemente, derart in Umfangsrichtung zueinander positioniert, dass bei Überschreitung eines bestimmten Verdrehwinkels in Umfangsrichtung sowohl der Freilauf sperrt als auch die Mitnahmeelemente der Überbrückungskupplung derart zueinander positioniert werden, dass ein verschleißloser Eingriff möglich ist. Damit wird gewährleistet, dass bei beliebiger Verringerung der Drehzahl des Primärrades beziehungsweise der Drehzahl der Antriebsmaschine auf sehr einfache Art und Weise eine Synchronisation für den Freilauf vorgenommen werden kann und damit die einzelnen Elemente der Überbrückungskupplung in die Position zueinander verbracht werden, welche einen verschleißfreien Schaltvorgang ermöglichen. Dabei kann als Überbrückungskupplung eine einfache standardisierte Klauenkupplung oder Schubriegelkupplung Verwendung finden, ohne dass hier zusätzliche Maßnahmen vorgesehen werden müssen, um den Verschleiß beim Schaltvorgang zu reduzieren. Die Überbrückungskupplung kann somit sehr kostengünstig realisiert werden.

Bezüglich der Anordnung des Freilaufes bestehen eine Mehrzahl von Möglichkeiten. Vorzugsweise wird dieser jedoch in axialer Richtung zwischen Eingang und Ausgang der Anfahreinheit betrachtet derart angeordnet, dass die gesamte Anfahreinheit nicht länger baut. Daher erfolgt die Anordnung in der Regel im Bereich der axialen Erstreckung des torusförmigen Arbeitsraumes und in radialer Richtung unterhalb dessen inneren Durchmessers. Die Anordnung des Freilaufes erfolgt im Bereich der Trennebene oder aber jeweils unterhalb eines der beiden Räder- Primärrad oder Sekundärrad - wobei in diesem Fall das jeweils andere Schaufelrad in axialer Richtung durch einen, den Freilauf tragenden bzw. abstützenden Vorsprung charakterisiert ist.

Die Überbrückungskupplung kann beispielsweise als Klauen-oder Schubriegelkupplung ausgeführt sein. Diese umfasst mindestens ein Eingangselement und ein Ausgangselement, die miteinander wenigstens mittelbar, d. h. direkt oder indirekt über ein Zwischenelement in Wirkverbindung bringbar sind. Das Eingangselement ist dabei drehfest mit dem Primärrad bzw. einem mit diesem drehfest gekoppelten Teil, beispielsweise der Primärradschale verbunden. Das Ausgangselement ist drehfest mit dem Sekundärrad bzw. einem mit diesem drehfest verbundenen Element gekoppelt. Zum Einkuppeln ist es erforderlich, eines der beiden Kupplungselemente - Eingangselement oder Ausgangselement oder Zwischenelement - gegenüber den jeweils anderen verschiebbar zu gestalten. Bei Ausführungen mit Zwischenelement erfolgt die Anbindung von Eingangselement und Ausgangselement jeweils drehfest und ortsfest an den Schaufelrädern bzw. den mit diesen drehfest gekoppelten Elementen. Dabei ist bezüglich der Anordnung auf eine zumindest teilweise Überdeckung ihrer Erstreckungsbereiche zu achten. Das Zwischenelement ist dann in Abhängigkeit der Lage und Ausrichtung der Mitnahmeelemente in radialer Richtung oder axialer Richtung gegenüber Eingangselement und Ausgangselement verschiebbar. Bei Ausgestaltungen mit direkter Kopplungsmöglichkeit zwischen Eingangselement und Ausgangselement ist eines der beiden verschiebbar oder verschwenkbar ausgebildet, vorzugsweise in axialer Richtung. Bei Verschieb- bzw. Verschwenkbarkeit des Ausgangselementes kann dieses
a) bei Nutzung des Sekundärrades als Kolben an diesem oder
b) an einem separaten drehfest mit dem Sekundärrad gekoppelten und in axialer Richtung gegenüber diesem verschieb- oder verschwenkbar gelagerten Kolben angeordnet werden.

Im Fall a) ist dabei darauf zu achten, dass auch eine entsprechende Verschiebbarkeit des mit dem Sekundärrad drehfest gekoppelten Teils des Freilaufes gegenüber dem Sekundärrad gewährleistet wird.

Bezüglich der Anordnungen von Primärrad und Sekundärrad bestehen keine Einschränkungen. Das Primärrad kann
a) in axialer Richtung zwischen dem Eingang und dem Ausgang betrachtet räumlich hinter dem Sekundärrad oder
b) vor diesem angeordnet sein.
   Dabei erfolgt in der Regel die Kopplung des Primärrades mit dem Eingang über eine drehfest mit diesem verbundene Primärradschale. Die Überbrückungskupplung kann dann im Zwischenraum, welcher von der Innenwand der Primärradschale und dem Außenumfang des Sekundärrades gebildet wird, angeordnet sein. Das Eingangselement der synchron schaltbaren Kupplung ist dann wenigstens mittelbar drehfest mit der Primärradschale verbunden.

Die Anordnung der Überbrückungskupplung kann allgemein- unabhängig von der räumlichen Anordnung von Primärrad und Sekundärrad - in axialer Richtung betrachtet räumlich vor oder hinter der hydrodynamischen Kupplung erfolgen.

Gemäß einer vorteilhaften Weiterentwicklung sind Mittel zum Abbau von Schwingungen vorgesehen. Diese sind als Torsionsschwingungsdämpfer, d. h. elastische Kupplungen ausgeführt. Entsprechend der Anordnung dieser kann gemäß einer vorteilhaften Ausgestaltung zur Bauteilredzierung und Bauraumminimierung auch eine Zusammenfassung von Elementen des Schwingungsdämpfers mit den Elementen - Eingangselement oder Ausgangselement - der Überbrückungskupplung oder des Freilaufes erfolgen.

Bezüglich der räumlichen und funktionalen Zuordnung des Torsionsschwingungsdämpfers bestehen eine Mehrzahl von Möglichkeiten. Vorzugsweise werden diese jedoch derart angeordnet, dass diese bei Leistungsübertragung über die einzelnen Elemente der Anfahreinheit im Leistungsfluss betrachtet nicht zwischen der synchron schaltbaren Kupplung und dem Freilauf liegen, um ein elastisches Glied zwischen beiden in allen Funktionszuständen sicher zu vermeiden. Die Anordnung erfolgt daher der parallelen Anordnung von Freilauf und synchron schaltbarer Kupplung vor oder nachgeschaltet. Um zusätzlich in allen Betriebszuständen die Wirkung als Torsionsschwingungsdämpfer zu gewährleisten, erfolgt die Anordnung des Torsionsschwingungsdämpfers der parallelen Anordnung von hydrodynamischer Kupplung, synchron schaltbarer Kupplung und Freilauf vor oder nachgeschaltet. Dabei erfolgt unabhängig von der Leistungsübertragung über eine der Komponenten der Anfahreinheit immer eine Führung des Leistungsflusses über den Torsionsschwingungsdämpfer.

Die erfindungsgemäß gestaltet Anfahreinheit ist für den Einsatz in Getrieben, insbesondere Schaltgetrieben, insbesondere automatisierten Schaltgetrieben oder Automatgetrieben geeignet. Die konkrete Ausführung hängt dabei von den Randbedingungen des Einsatzfalles ab.

Die erfindungsgemäße Lösung wird nachfolgend anhand von Figuren erläutert. Darin ist im Einzelnen folgendes dargestellt:
- Figuren 1a und 1b: verdeutlichen in schematisch stark vereinfachter Darstellung zwei mögliche Grundvarianten einer erfindungsgemäß gestalteten Anfahreinheit;
- Figur 2a: verdeutlicht in schematischer Darstellung den Grundaufbau einer Ausführung einer Anfahreinheit gemäß Figur 1a;
- Figuren 2b bis 2e: verdeutlichen Ausführungen der Anfahreinheiten mit Mitteln zum Schwingungsabbau und deren Anordnung bezogen auf den Freilauf;
- Figur 3: verdeutlicht eine mögliche konstruktive Ausführung einer Anfahreinheit mit Torsionsschwingungsdämpfer gemäß Figur 2c;
- Figur 4: verdeutlicht eine alternative Ausführung mit Anordnung der Überbrückungskupplung räumlich in axialer Richtung bei Leistungsübertragung vom Eingang zum Ausgang betrachtet hinter der hydrodynamischen Kupplung;
- Figur 5: verdeutlicht eine Ausführung des der Anfahreinheit zuzuordnenden Steuersystems;
- Figur 6: verdeutlicht in schematisch stark vereinfachter Darstellung die Einbauposition der Freilaufelemente und der Elemente der Überbrückungskupplung in Umfangsrichtung zueinander;
- Figur 7: verdeutlicht die Ausgestaltung der einzelnen Mitnahmeelemente von Eingangselement und Ausgangselement.

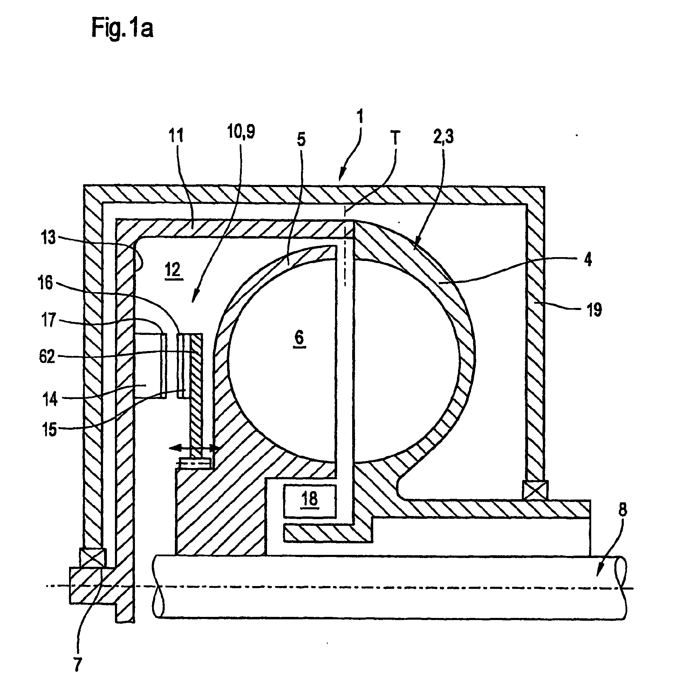

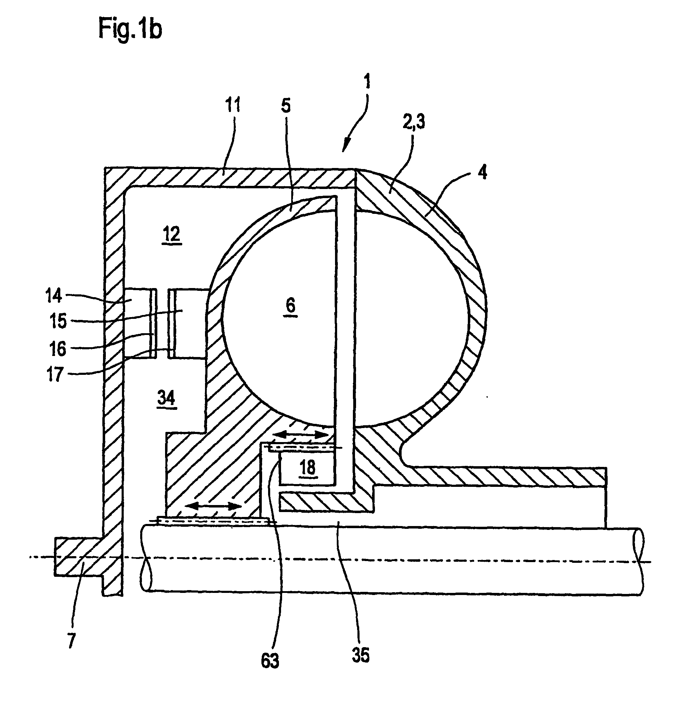

Die Figuren 1a und 1b verdeutlichen in schematisch stark vereinfachter Darstellung den Grundaufbau einer erfindungsgemäß gestalteten Anfahreinheit 1, umfassend ein Anfahrelement 2. Das Anfahrelement 2 ist dabei als hydrodynamische Kupplung 3, umfassend ein als Pumpenrad im Traktionsbetrieb bei Leistungsübertragung zwischen einer Antriebsmaschine und ein im Abtrieb fungierendes Primärrad 4 und ein Sekundärrad 5, die miteinander einen mit Betriebsmittel befüllbaren Arbeitsraum 6, welcher vorzugsweise torusförmig ausgebildet ist, bilden, ausgeführt. Die hydrodynamische Kupplung 3 ist frei von einem Leitrad, das heißt frei von einem zusätzlichen Schaufelrad, welches zwischen Primärrad 4 und Sekundärrad 5, in axialer Richtung betrachtet, angeordnet ist. Die Anfahreinheit 1 umfasst des Weiteren mindestens einen Eingang 7 und einen Ausgang 8. Die Begriffe "Eingang" und "Ausgang" sind dabei funktional zu verstehen und beziehen sich auf die Kraftübertragungsrichtung im Traktionsbetrieb betrachtet von einer Antriebsmaschine zu einem Abtrieb. Eingang und Ausgang können dabei in Form von Wellen ausgeführt sein. Der Eingang 7 ist mit dem Primärrad 4 der hydrodynamischen Kupplung 3 verbunden, während der Ausgang 8 drehfest mit dem Sekundärrad 5 gekoppelt ist. Die Anfahreinheit 1 umfasst des weiteren eine Überbrückungskupplung 9, welche parallel zur hydrodynamischen Kupplung 3 geschaltet ist und eine Umgehung der hydrodynamischen Leistungsübertragung, die durch den im torusförmigen Arbeitsraum umlaufenden Arbeitskreislauf gebildet wird, durch die mechanische Durchkopplung zwischen Primärrad 4 und Sekundärrad 5 ermöglicht. Die Überbrückungskupplung 9 ist im dargestellten Fall in Kraftflussrichtung bei Leistungsübertragung vom Eingang 7 zum Abtrieb, das heißt Ausgang 8 betrachtet, räumlich vor der hydrodynamischen Kupplung 3 angeordnet. Die Überbrückungskupplung 9 ist als mechanisch übertragende und synchron schaltbare Kupplung, vorzugsweise in Form einer Klauenkupplung 10 oder einer Zahnkupplung, ausgeführt. Die mittels der Überbrückungskupplung 9 miteinander zu koppelnden Elemente werden dabei vom Primärrad 4 und vom Sekundärrad 5 beziehungsweise den, mit diesen drehfest verbundenen Elementen gebildet. Im dargestellten Fall ist das Primärrad 4 drehfest mit einer sogenannten Primärradschale 11 verbunden. Die Primärradschale 11 umschließt das Sekundärrad 5 sowohl in axialer Richtung als auch teilweise in radialer Richtung. Im so gebildeten Zwischenraum 12 zwischen Innenwand 13 der Primärradschale 11 und dem Sekundärrad 5 ist die Überbrückungskupplung 9 angeordnet. Dieser umfasst mindestens ein Eingangselement 14 und ein Ausgangselement 15, die miteinander in Wirkverbindung - vorzugsweise durch Formschluss -bringbar sind.

Dabei ist das Eingangselement 14 wenigstens mittelbar drehfest mit dem Primärrad 4, insbesondere der mit dieser drehfest gekoppelten Primärradschale 11, verbunden, während das Ausgangselement 15 wenigstens mittelbar drehfest, das heißt direkt oder über weitere Zwischenelemente drehfest mit dem Sekundärrad 5 gekoppelt ist. Beide Elemente - Eingangselement 14 und Ausgangselement 15 - weisen komplementär zueinander ausgeführte Mitnahmeelemente 16 beziehungsweise 17 auf. Zur Realisierung des Formschlusses müssen diese miteinander in Eingriff stehen, so dass mindestens eines der beiden Elemente - Eingangselement 14 oder Ausgangselement 15 - axial verschiebbar gelagert ist. Im dargestellten Fall ist das Eingangselement 14 drehfest und in axialer Richtung ortsfest mit der Primärradschale 11 verbunden. Das Ausgangselement 15 ist dabei in Umfangsrichtung drehfest mit dem Sekundärrad 5 verbunden und in axialer Richtung gegenüber dem Eingangselement 14 verschiebbar oder verschwenkbar ausgeführt. Dazu ist das Ausgangselement 15 gemäß Figur 1a an einem drehfest mit dem Sekundärrad 5 gekoppelten Kolben 62 verbunden, welcher gegenüber dem Sekundärrad 5 verschiebbar oder verschwenkbar ist. Erfindungsgemäß ist ferner ein Freilauf 18 zwischen dem Primärrad 4 und dem Sekundärrad 5 vorgesehen. Die räumliche Anordnung des Freilaufes 18 in axialer Richtung erfolgt dabei entweder im Bereich der Trennebene T zwischen Primärrad 4 und Sekundärrad 5 oder in axialer Richtung versetzt dazu. Dabei kann die Anordnung des Freilaufes 18 in axialer Richtung betrachtet im Bereich des Sekundärrades 5 oder im Bereich des Primärrades 4 erfolgen. Vorzugsweise wird immer eine Anordnung gewählt, die die axiale Baulänge der hydrodynamischen Kupplung 3 nicht unnötig verlängert. Daher erfolgt die Anordnung vorzugsweise immer in einem Bereich, der durch die Erstreckung des Arbeitsraumes 6 in axialer Richtung charakterisiert ist. Der Freilauf 18 ist derart ausgeführt, dass dieser bei höherer Drehzahl des Sekundärrades 5 sperrt und damit das Primärrad 4 mitnimmt.

Gemäß Figur 1b wird die axiale Verschiebbarkeit des Ausgangselementes 15 der Kupplung 9 durch die axiale Verschiebbarkeit des Sekundärrades 5 realisiert. In diesem Fall ist der mit dem Sekundärrad 5 gekoppelte Teil 63 des Freilaufes 18 ebenfalls drehfest mit diesem, jedoch in axialer Richtung relativ zu diesem verschiebbar verbunden. Die Verbindung erfolgt beispielsweise über eine Profilverbindung 64.

Die Anfahreinheit 1, wie in der Figur 1a dargestellt, kann beispielsweise als autarke Baueinheit gestaltet werden, welche durch Anflanschen oder Aufstecken mit in einer Getriebebaueinheit nachgeordneten Schaltsätzen verbindbar ist. Diese umfasst in diesem Fall noch ein Gehäuse 19. Im Gehäuse 19 sind dabei das Anfahrelement 2 und die Überbrückungskupplung 9 gelagert. Dabei kann der Eingang 7 der Anfahreinheit 1 beispielsweise von einem Anlasserzahnkranz oder einem mit diesem koppelbaren Element gebildet werden. Ferner denkbar ist die Ausführung als Welle.

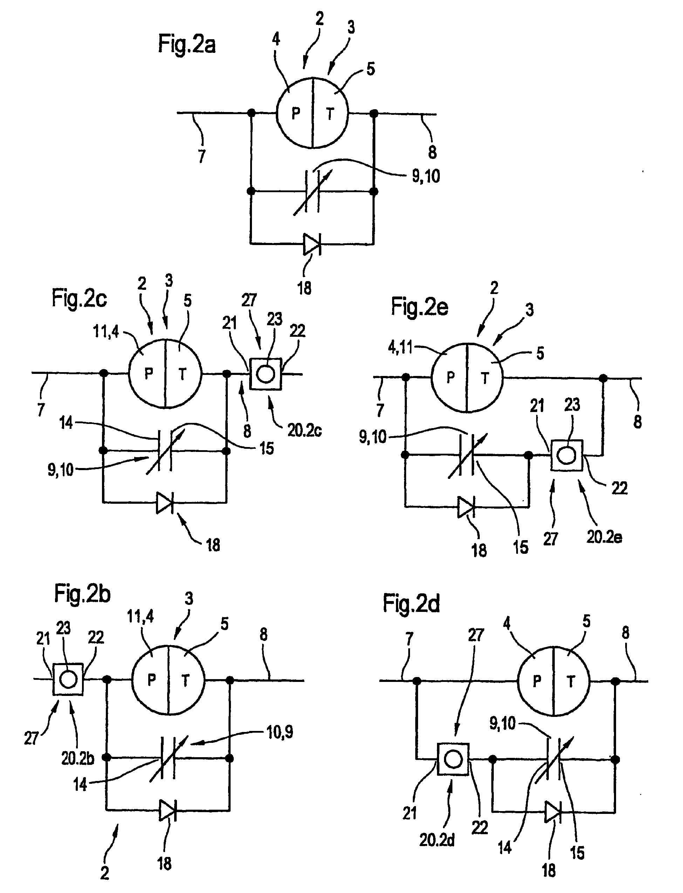

Verdeutlicht die Figur 2a anhand eines Schemas das Grundprinzip des Aufbaus einer Anfahreinheit 2, insbesondere der Anordnung der Komponenten hydrodynamische Kupplung 3, synchron schaltbare Kupplung, insbesondere Überbrückungskupplung 9 und Freilauf 18 parallel zueinander ohne zusätzliche Funktionselemente, so verdeutlichen die Figuren 2b bis 2e in stark vereinfachter schematisierter Darstellung die Möglichkeiten der Zuordnung von Mitteln 27 zum Schwingungsabbau, insbesondere eines Torsionsschwingungsdämpfers 20 zu den einzelnen Komponenten bei Integration dessen in der Anfahreinheit 2. Bei der Ausführungsform gemäß Figur 2b ist der Torsionsschwingungsdämpfer 20.2b der hydrodynamischen Kupplung 3 in Kraftflussrichtung betrachtet vom Eingang 7 zum Ausgang 8 vorgeschaltet. Ferner ist der Torsionsschwingungsdämpfer ebenfalls der Überbrückungskupplung 9 vorgeschaltet. Dieser übernimmt dabei die Funktion einer drehelastischen Kupplung und überträgt die Leistung zum Primärrad 4 beziehungsweise der drehfest mit dieser gekoppelten Primärradschale 11 zum Primärrad 4 oder vom Primärrad 4 beziehungsweise der mit dieser drehfest gekoppelten Primärradschale 11 zum Sekundärrad 5, wobei zusätzlich Schwingungen von Seiten des Antriebes gedämpft werden. Bei Schaltung der Überbrückungskupplung 9 erfolgt der Leistungsfluss über den Torsionsschwingungsdämpfer 20.2b zum Eingangselement 14 der Überbrückungskupplung 9. Der Torsionsschwingungsdämpfer 20.2b weist dabei in seiner Funktion als drehelastische Kupplung mindestens ein Kupplungseingangselement 21 auf, welches mit dem Eingang 7 drehfest gekoppelt ist und ein Kupplungsausgangsgangselement 22, welches drehfest mit der Primärradschale 11 beziehungsweise Primärrad 4 und dem Eingangselement 14 der Überbrückungskupplung 9 verbunden ist. Zwischen dem Kupplungseingangselement 21 und dem Kupplungsausgangselement 22 sind Mittel 23 zur Feder- und Dämpfungskopplung angeordnet. Diese können unterschiedlich ausgeführt sein. Vorzugsweise wird ein hydraulischer Torsionsschwingungsdämpfer zur Anwendung gelangen, wobei bei diesem zwischen Kupplungseingangselement 21 und Kupplungsausgangselement 22 Dämpfungskammem vorgesehen sind, die mit einem Dämpfungsmedium befüllbar sind.

Bei der Ausführung gemäß Figur 2c ist der Torsionsschwingungsdämpfer 20.2c der Überbrückungskupplung 9 und der hydrodynamischen Kupplung 3 in Kraftflussrichtung betrachtet nachgeschaltet. Der Torsionsschwingungsdämpfer 20.2c wirkt somit im Traktionsbetrieb erst nach der Anfahreinheit. Dabei kann gemäß einer besonders vorteilhaften Ausgestaltung das Kupplungseingangselement 21 des Torsionsschwingungsdämpfers 20.2c vom Ausgangselement 15 der Überbrückungskupplung 9 gebildet werden beziehungsweise mit diesem eine bauliche Einheit bilden, wobei das Ausgangselement 15 in diesem Fall drehfest mit dem Sekundärrad 5 verbunden ist, bzw. an diesem ausgebildet wird.

Bei beiden Lösungen gemäß der Figuren 2b und 2c erfolgt die Leistungsübertragung in allen Funktionszuständen - Traktions- und Schubbetrieb sowie Leistungsübertragung über eine Komponente der Anfahreinheit - immer über den Torsionsschwingungsdämpfer 20.2b und 20.2c. Demgegenüber offenbaren die Figuren 2d und 2e Anordnungsmöglichkeiten des Torsionsschwingungsdämpfers 20.2d, 20.2e, wobei dieser bei Leistungsübertragung über die hydrodynamische Kupplung nicht im Leistungsfluss liegt, d. h. in diesem Falle an der Leistungsübertragung nicht beteiligt ist. Gemäß Figur 2d erfolgt die Anordnung des Torsionsschwingungsdämpfers 20.2d vor der Überbrückungskupplung 9. Das Kupplungseingangselement 21 ist dabei drehfest mit dem Eingang 7 bzw. der Kopplung dieses mit dem Primärrad 4 verbunden. Das Kupplungsausgangselement 22 ist drehfest mit der Überbrückungskupplung 9, insbesondere dem Einganselement 14 verbunden. Dabei besteht die Möglichkeit der baulichen Zusammenfassung von Eingangselement 14 der Überbrückungskupplung 9 und Kupplungsausgangselement 22 der elastischen Kupplung in Form des Torsionsschwingungsdämpfers 20.2d.

Gemäß Figur 2e erfolgt die Anordnung des Torsionsschwingungsdämpfers 20.2e funktional hinter der Überbrückungskupplung 9. Das Kupplungseingangselement 21 ist dabei drehfest mit dem Ausgangselement 15 der Überbrückungskupplung 9 verbunden. Das Kupplungsausgangselement 22 ist drehfest mit dem Sekundärrad 5 bzw. der Verbindung zwischen Sekundärrad 5 und Ausgang 8 verbunden. Dabei besteht die Möglichkeit der baulichen Zusammenfassung von Ausgangselement 15 der Überbrückungskupplung 9 und Kupplungseingangselement 21 der elastischen Kupplung in Form des Torsionsschwingungsdämpfers 20.2e.

Bei allen Lösungen gemäß der Figuren 2a bis 2d ist der Freilauf 18 derart ausgeführt und angeordnet, dass er im Traktionsbetrieb, das heißt bei Leistungsübertragung vom Eingang 7 zum Ausgang 8 frei ist und damit ein Umlaufen der einzelnen Elemente mit Relativgeschwindigkeit gegeneinander ermöglicht, während im Schubbetrieb der Freilauf 18 gesperrt ist.

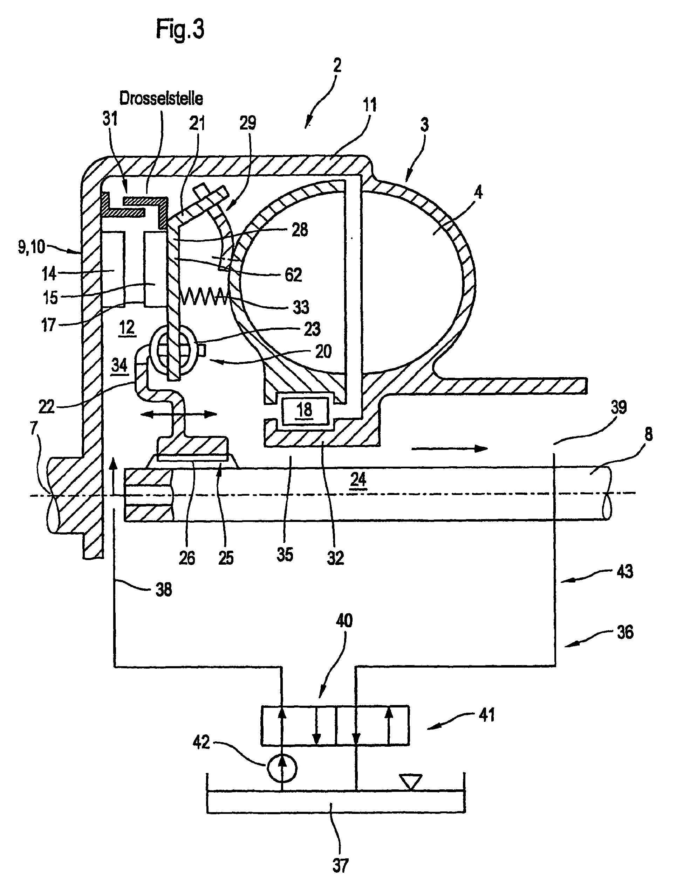

Die Figur 3 verdeutlicht in schematisch vereinfachter Darstellung eine mögliche konstruktive Ausgestaltung einer Anfahreinheit 1.3 gemäß Figur 1a mit zusätzlichen Mitteln 27 zum Abbau von Schwingungen, wobei diese entsprechend Figur 2c angeordnet sind, d. h. der hydrodynamischen Kupplung 3 und der Überbrückungskupplung 9 in Leistungsflussrichtung zwischen Eingang und Ausgang 8 betrachtet nachgeschaltet sind. Dargestellt ist der drucklose Zustand, d. h. die Überbrückungskupplung 9 ist geöffnet. Der Grundaufbau entspricht dem in Figur 1a beschriebenen, weshalb für gleiche Elemente die gleichen Bezugszeichen verwendet werden. Das Primärrad 4 ist hier drehfest mit einer Primärradschale 11 verbunden, wobei die Primärradschale 11 mit dem Eingang 7 gekoppelt ist beziehungsweise diesen bildet. Das Primärrad 4 ist dabei in axialer Richtung in Kraftflussrichtung vom Eingang 7 zum Ausgang 8 betrachtet hinter dem Sekundärrad 5 angeordnet. Zu diesem Zweck ist das Primärrad 4 als Hohlwelle ausgeführt, durch welche das Sekundärrad 5 beziehungsweise das drehfest mit diesem koppelbare Element in Form einer Sekundärradwelle 24 hindurchgeführt wird. Im Zwischenraum 12 sind die Mittel 27 zum Abbau von Schwingungen angeordnet und axial verschiebbar. Das Sekundärrad 5 ist daher über den Torsionsschwingungsdämpfer 20 mit dem Ausgang 8, insbesondere der Sekundärradwelle 24 gekoppelt, beispielsweise mittels einer Profilverbindung 25, die beispielsweise als Keilwellenverbindung ausgebildet ist, wobei das Kupplungsausgangselement 22 an seinem Innenumfang eine entsprechende Profilierung 26 aufweist, die einen Kraftschluss in Umfangsrichtung ermöglicht. Das Kupplungseingangselement 21 wird dabei von einem drehfest, beispielsweise über eine formschlüssige Verbindung 29 mit dem Sekundärrad 5 gekoppelten Element 28 gebildet. Das Eingangselement 21 bildet dabei einen Kolben 62 zur Beaufschlagung des Ausgangselementes 15 der Überbrückungskupplung 9, wobei beide vorzugsweise eine bauliche Einheit bilden bzw. zu dieser zusammengefasst sind. Das Sekundärrad 5 ist ortsfest angeordnet und gelagert. Bei Druckbeaufschlagung zur Betätigung der Überbrückungskupplung 9 erfolgt eine Verschiebung des Kolbens 62 in Richtung des Eingangselementes 14 der Überbrückungskupplung 9. Die Verschiebung des Kolbens 62 wird durch die drehfeste, jedoch in axialer Richtung verschiebbare Ausbildung der formschlüssigen Verbindung 29 und der Verschiebbarkeit des Kupplungsausgangselementes 22 möglich. Das Kupplungsausgangselement 22 des Torsionsschwingungsdämpfers 20 ist mit der Sekundärradwelle 24 verbunden und trägt die Profilierung zur Realisierung der Profilverbindung 25. Dieses ist dabei drehfest jedoch in axialer Richtung verschiebbar auf der Sekundärradwelle 24 gelagert. Um die Überbrückungskupplung 9 im drucklosen Zustand geöffnet zu halten, wird die erforderliche Vorspannung über eine Federeinrichtung in Form eines Federpaketes 33 gewährleistet, das zwischen Sekundärrad 5 und Kolben 62 angeordnet ist. Der Kolben 62 trägt ferner zur Verringerung der Bauteilanzahl das Ausgangselement 15 der Überbrückungskupplung 9, insbesondere die Mitnahmeelemente 17. Das Eingangselement 14 ist drehfest mit der Primärradschale 11 verbunden. Die Kopplung erfolgt dabei vorzugsweise direkt. Zur Realisierung einer Druckdifferenz beidseitig des Kolbens 62 ist eine Drosselstelle 31 vorgesehen, die der Überbrückungskupplung 9 zugeordnet ist und deren einzelne, die Drossel bildenden Elemente jeweils drehfest mit die Ein- und Ausgangselemente 14, 15 der Überbrückungskupplung 9 tragenden Elemente bzw. den drehfest mit diesen gekoppelten Elemente verbunden sind. Der zwischen Primärrad 4 und Sekundärrad 5 angeordnete Freilauf 18 ist im dargestellten Fall im Bereich der Trennebene T zwischen dem Primärrad 4 und dem Sekundärrad 5 angeordnet. Im dargestellten Fall ist dieser in einem Bereich von der Trennebene T in axialer Richtung über die axiale Erstreckung des Sekundärrades 5 hin angeordnet. Das Primärrad 4 weist zu diesem Zweck in axialer Richtung eine zum Sekundärrad 5 in Einbaulage hin gerichtete Verlängerung im Bereich seines Innendurchmessers auf. Dieser axial ausgerichtete Vorsprung 32 erstreckt sich dabei vollständig in Umfangsrichtung und in axialer Richtung über einen Teil der axialen Erstreckung des Sekundärrades 5. ,

Die Aktivierung der Überbrückungskupplung 9 wird durch die Steuerung der Betriebsmittelströme in der hydrodynamischen Kupplung 9 realisiert. Dabei wird der Zwischenraum 12 als erster Betriebsmittelführungskanal- oder Raum 34 genutzt. Ein zweiter Betriebsmittelführungskanal- oder Raum 35 ist im Bereich des Innendurchmessers Dᵢ des torusförmigen Arbeitsraumes 6 oder unterhalb dessen vorgesehen. Dabei können der erste und zweite Betriebsmittelführungskanalbeziehungsweise Raum 34 beziehungsweise 35 wahlweise jeweils als Zufuhr- oder Ablaufkanal- beziehungsweise Raum zum torusförmigen Arbeitsraum 6 genutzt werden. Durch diese wahlweise Änderung der Funktion der einzelnen Betriebsmittelführungskanäle- beziehungsweise Räume kann die Durchströmungsrichtung der hydrodynamischen Kupplung 3 auf einfache Art und Weise zwischen zentripetal und zentrifugal geändert werden. Diese Durchströmung wird des Weiteren genutzt, um beispielsweise die Überbrückungskupplung 9 in der ausgerückten Stellung zu halten, insbesondere bei zentripetaler Durchströmung. In diesem Fall erfolgt die Führung des Betriebsmittels zum Arbeitsraum 6 der hydrodynamischen Kupplung 3 über den Zwischenraum 12 zum radial äußeren Bereich des torusförmigen Arbeitsraumes im Bereich der Trennebene T zwischen Primärrad 4 und Sekundärrad 5 und von dort in dem sich im torusförmigen Arbeitsraum 6 bildenden Arbeitskreislauf. Um eine Zuführung des Betriebsmittels bei zentripetaler Durchströmung unter Vermeidung einer Abströmung im Arbeitskreislauf zu bewirken, sind dabei Primärrad 4 und Sekundärrad 5 in radialer Richtung gemäß einer besonders vorteilhaften Ausgestaltung mit Versatz ausgeführt. Ist es jedoch erforderlich, dass Sekundärrad 5 als Kolben zu nutzen bzw. den Kolben 62 zu verschieben, wird der zweite Betriebsmittelführungskanal- oder Raum 35 als Zufuhrkanal genutzt. In diesem Falle erfolgt die Durchströmung zentrifugal. Das der hydrodynamischen Kupplung dann zugeordnete Betriebsmittelsystem 36, welches beispielhaft in der Figur 3 dargestellt ist, umfasst dann eine Betriebsmittelversorgungswelle 37 und einen ersten Anschluss 38 zur Kopplung mit dem ersten Betriebsmittelführungskanal- oder Raum 34 und einen zweiten Anschluss 39 zur Kopplung mit dem zweiten Betriebsmittelführungskanal- oder Raum 35. Des Weiteren sind Mittel 40 zur wahlweisen Änderung der Durchströmungsrichtung der hydrodynamischen Kupplung 3 durch Zuweisung der Funktion des Zulaufes oder des Ablaufes zu den beiden Betriebsmittelführungskanälen- oder Räumen vorgesehen. Der Begriff Anschluss ist dabei nicht nur als konstruktives Element zu verstehen, sondern hinsichtlich seiner Funktion als funktionale Einheit. Gemeint ist der Übergang zwischen den Betriebsmittelführungskanälen- oder Räumen 34 beziehungsweise 35 und den Verbindungsleitungen zur Betriebsmittelversorgungsquelle 37. Die Ausgestaltung der Mittel 40 zur wahlweisen Änderung der Funktionsweise der Betriebsmittelführungskanäle- oder Räume 34 beziehungsweise 35 kann vielgestaltig erfolgen. Im einfachsten Fall umfassen diese mindestens eine Ventileinrichtung 41 mit wenigstens zwei Schaltstellungen. Eine erste Schaltstellung ist dabei durch die Kopplung zwischen Zulauf 42 und erstem Betriebsmittelführungskanal- oder Raum 34 und die zweite Schaltstellung durch Kopplung zwischen dem Zulauf 42 und dem zweiten Betriebsmittelführungskanal- oder Raum 35 charakterisiert. Beide Betriebsmittelführungskanäle- oder Räume sind dabei vorzugsweise über einen offenen Kreislauf miteinander verbunden. Der offene Kreislauf ist hier mit 43 bezeichnet.

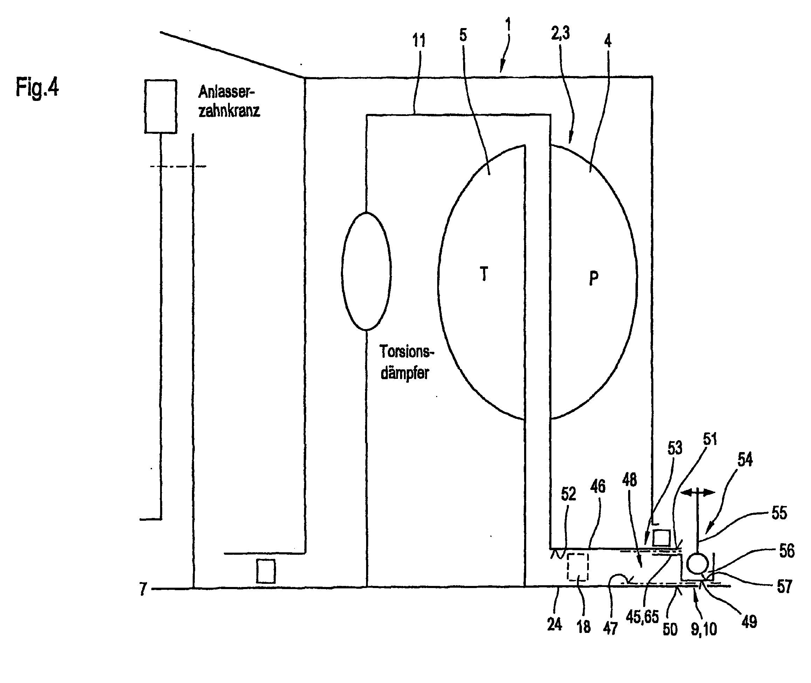

Während die Figuren 1 bis 3 Ausgestaltungen mit Anordnung der Überbrückungskupplung in axialer Richtung räumlich betrachtet vor der hydrodynamischen Kupplung 3 charakterisiert sind, verdeutlicht Figur 4 eine weitere Ausgestaltung der Überbrückungskupplung 9 als synchronschaltbare Kupplung, wobei die Anordnung räumlich in axialer Richtung betrachtet zwischen Eingang 7 und Ausgang 8 hinter der hydrodynamischen Kupplung 3 erfolgt. Der Freilauf 18 ist dann der Überbrückungskupplung 9 in dieser Richtung vorgeordnet und somit erfolgt die Anordnung in axialer Richtung vor der Überbrückungskupplung 9. Die Ausführung gemäß den Figuren 1 bis 3 ist dabei durch Anbindung der miteinander formschlüssig in Eingriff stehenden Elemente an rotierende Bauteile charakterisiert. Bei der Ausführung gemäß Figur 4 mit beispielhafter Anordnung der Überbrückungskupplung 9 in räumlicher Richtung hinter der hydrodynamischen Kupplung 3 wird die Realisierung des Formschlusses über ein an einem ortsfest gelagerten Element geführten. Zusatzelement 65 realisiert. Die mittels der Überbrückungskupplung 9, welche vorzugsweise ebenfalls in Form einer Klauenkupplung 10 ausgebildet ist, miteinander zu koppelnden Elementen werden vom Primärrad 4 und vom Sekundärrad 5 gebildet. Um die beiden Elemente - Primärrad 4 und Sekundärrad 5 - nicht gegeneinander verschieben zu müssen, wird der mittels der Klauenkupplung 10 zwischen beiden in Umfangsrichtung wirkende Formschluss durch Verschiebung eines klauentragenden Teiles 45 in axialer Richtung realisiert. Zu diesem Zweck bestehen bezüglich der konkreten konstruktiven Ausgestaltung unterschiedliche Möglichkeiten, wobei dies auch immer von der konkreten Anordnung von Primärrad 4 und Sekundärrad 5 in der Anfahreinheit 1 in Einbaulage betrachtet, abhängt. Die das Primärrad 4 tragende Welle 46, welche als Primärradwelle bezeichnet wird, ist als Hohlwelle ausgeführt, während die Sekundärradwelle 24 als Vollwelle oder Hohlwelle ausgeführt werden kann und sich in axialer Richtung durch die Primärradwelle 46 erstreckt und den Ausgang 8 der Anfahreinheit 1 bildet. Die Klauenkupplung 10 umfasst dabei neben dem klauentragenden Teil 45 eine am Sekundärrad 5, insbesondere der Sekundärradwelle 24 angeordnete Führung 47 zur Realisierung einer Profilverbindung 48, wobei die Profilverbindung 48 beispielsweise im extremsten Fall als Keilverbindung ausgeführt werden kann. Der klauentragende Teil 45 ist im dargestellten Fall als Hohlring ausgeführt, welcher zwischen der Primärradwelle 46 und der Sekundärradwelle 24 in axialer Richtung verschiebbar ist. Dieser umfasst dabei am Innenumfang 49 ausgebildete Ausnehmungen und Vorsprünge, welche mit dazu komplementären Ausnehmungen und Vorsprüngen am Außenumfang 50 an der Sekundärradwelle 24 in Wirkverbindung treten. Des weiteren sind am klauentragenden Teil 45 am Außenumfang 51 Ausnehmungen und Vorsprünge vorgesehen, welche mit dazu komplementär ausgeführten Ausnehmungen und Vorsprüngen am Innenumfang 52 der mit dem Primärrad 4 gekoppelten und sich am Gehäuse abstützenden Welle 46 eine Profilverbindung 53 bilden. Bei dieser Ausführung wird der Formschluss jeweils in radialer Richtung erzeugt. Denkbar sind jedoch auch Ausgestaltungen für die Klauenschaltungen mit Klauenkupplungen, bei denen der Formschluss in Einbaulage in axialer Richtung betrachtet in axialer Richtung erzeugt wird. Dies bedingt jedoch eine entsprechende Ausgestaltung von Primärrad- und Sekundärradwelle 46 beziehungsweise 24. Die Betätigung des klauentragenden Teiles 45 zur Erzeugung des Formschlusses kann auf unterschiedliche Art und Weise erfolgen. Denkbar sind beispielsweise pneumatische Lösung mittels einer Betätigungseinrichtung 54, indem ein in axialer Richtung verschiebbares Kolbenelement 55 mit Druck beaufschlagt wird, wobei das Kolbenelement 55 einen in radialer Richtung ausgerichteten Vorsprung 56 in Form einer Schaltgabel aufweist, der in eine dazu komplementäre Ausnehmung 57 am klauentragenden Teil 45 eingreift und über diese formschlüssige Verbindung eine Verschiebung in axialer Richtung ermöglicht. Der Freilauf 18 ist dann dieser Einrichtung in axialer Richtung vorgeordnet.

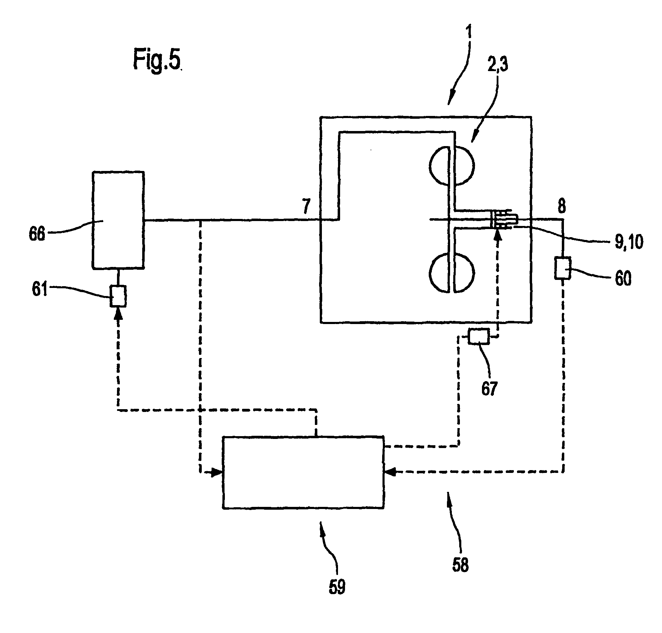

Figur 5 verdeutlicht in schematisch vereinfachter Darstellung das Steuerschema zur Betätigung der Anfahreinheit 1. Demnach ist dieser eine Steuervorrichtung 58 zugeordnet, welche eine Steuereinrichtung in Form eines Steuergerätes 59 umfasst, welcher mindestens eine, die Drehzahl am Sekundärrad 5 wenigstens mittelbar charakterisierende Größe zugeführt und verarbeitet wird. Unter Steuervorrichtung wird dabei die Gesamtheit aus Steuereinrichtung sowie den Erfassungsmitteln zur Erfassung der zu verarbeitenden Größen und der Stelleinrichtung zur Änderung der Regelgröße, das heißt der Drehzahl n_{P} des Primärrades 5 beziehungsweise der Antriebsmaschine n_{M} verstanden. Der Begriff Stelleinrichtung bezieht sich dabei im wesentlichen auf die Funktion des Steuergerätes, welche beispielsweise von einem Mikrorechner übernommen werden kann. Unter der, die Drehzahl des Sekundärrades 5 wenigstens mittelbar beschreibenden Größe kann dabei direkt die Drehzahl entweder am Ausgang 8 oder am Sekundärrad 5 erfasst werden oder aber eine, diese zumindest indirekt beschreibende Größe, beispielsweise bei Einbau der Anfahreinheit in eine Getriebebaueinheit eine am Ausgang der Getriebebaueinheit anliegende Drehzahl, welche über die Übersetzungsstufen zurückgerechnet die Drehzahl des Sekundärrades 5 charakterisiert, beziehungsweise zu dieser proportional ist. Bei der Steuereinrichtung 59 kann es sich dabei um die ohnehin vorhandene Steuereinheit der Getriebebaueinheit oder bei Einbau in einem Antriebsstrang in Fahrzeugen die sogenannte Fahrsteuerung handeln. Zur Ermittlung der Drehzahl des Sekundärrades 5 oder eine diese wenigstens mittelbar charakterisierende Größe sind entsprechende Erfassungseinrichtungen 60 vorgesehen, welche neben der Erfassung der entsprechenden Größe Signale generieren, die der Steuereinrichtung 59 zugeführt werden. Die Zufuhr kann dabei direkt über die Kopplung der einzelnen Erfassungseinrichtung oder Erfassungseinrichtungen 60 mit der Steuereinrichtung 59 oder aber über ein Datenkommunikationsnetzwerk der Steuereinrichtung 59 zur Verarbeitung zur Verfügung gestellt werden, wobei diese Information dann in der Regel auch für andere Applikationen im Antriebsstrang abrufbar ist.

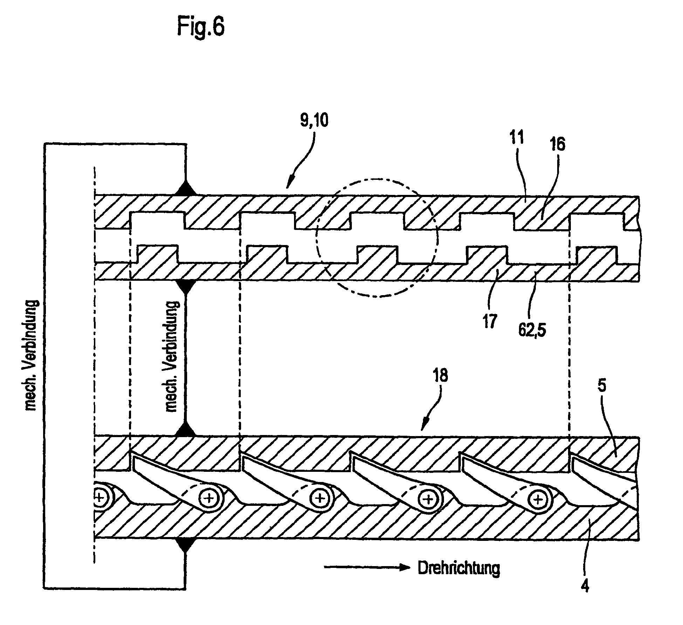

In der Steuereinrichtung 59 erfolgt eine Verarbeitung der die Drehzahl des Sekundärrades 5 wenigstens mittelbar beschreibenden Größe derart, dass mindestens eine Stellgröße Y zur Ansteuerung einer mit der Anfahreinheit 1 koppelbaren Antriebsmaschine 66 gebildet wird und beispielsweise eine Stelleinrichtung 61, die dieser zugeordnet ist, angesteuert wird. Dabei erfolgt eine Ansteuerung der Antriebsmaschine lediglich dahingehend, dass die Drehzahl der Antriebsmaschine unter die Drehzahl n_{T} des Turbinenrades gesenkt wird und damit auch eine Senkung der Drehzahl des Primärrades n_{P} erfolgt. Vor dem Synchronisiervorgang erfolgt somit eine Rücknahme der Motordrehzahl n_{Mot}. Das Sekundärrad 5 treibt dann über den gesperrten Freilauf 18 das Primärrad 4 an. Beide - Primärrad 4 und Sekundärrad 5 - laufen synchron. In diesem Zustand kann dann eine Schaltung der formschlüssigen Synchronisierung, insbesondere der Überbrückungskupplung, 9 erfolgen. Da die Schaltposition vorzugsweise aufgrund der in Figur 6 beschriebenen Möglichkeit eingenommen wird, kann zeitgleich mit der Ansteuerung der Antriebsmaschine 66 die Schaltung eingeleitet, d. h. die Stelleinrichtung 67 zum Schließen der Kupplung 9 aktiviert werden. Nach erfolgter Schaltung wird die Motordrehzahl n_{Mot}, das heißt die Drehzahl der Antriebsmaschine und damit auch des Primärrades 4 wieder erhöht. Der Leistungsfluss erfolgt über die formschlüssig arbeitende Überbrückungskupplung 9 auf das Sekundärrad 5 und damit den Ausgang 8 der Anfahreinheit und aufgrund der Kopplung des Ausganges 8 in der Regel mit einer nachgeschalteten Getriebebaueinheit auf die Getriebeausgangswelle. Außerhalb des Anfahrvorganges erfolgt ein Öffnen der Überbrückungskupplung nur im Schubbetrieb. Dabei treibt bei geöffneter Überbrückungskupplung 9 das Sekundärrad über den gesperrten Freilauf das Primärrad 4 an. Fällt jedoch die Drehzahl des Sekundärrades 5 n_{T} unter die Motor-Leerlaufdrehzahl, dreht sich der Leistungsfluss um und das Primärrad 4 treibt über den hydrodynamischen Kreislauf das Sekundärrad 5 an. Bei dieser Ausführung kann in allen Funktionszuständen die hydrodynamische Kupplung gefüllt bleiben.

Die Figur 6 verdeutlicht in schematisch stark vereinfachter Darstellung anhand jeweils eines Ausschnittes aus dem Freilauf 18 und der Klauenkupplung 10 in abgewickelter Darstellung die erforderliche Einbausituation, um standardmäßig einfache Klauenkupplungen 10 zu verwenden. In diesem Fall erfolgt der Einbau sowohl des Freilaufes 18 als auch der Klauenkupplung 10 derart in Umfangsrichtung in einer Position zueinander, dass in Umfangsrichtung gleiche Drehwinkel α für den Freilauf als auch die Mitnahmeelemente 16, 17 tragenden Teile der Klauenkupplung 10 erforderlich sind, um beide in Schließbeziehungsweise Sperrrichtung zu verbringen, d. h. die Eingriffsebenen von Überbrückungskupplung 9 und Freilauf 18 werden bei gleichen Verdrehwinkeln in Umfangsrichtung erzielt.

In diesem Fall kann die Drehzahl der Antriebsmaschine beliebig abgesenkt werden, so dass aufgrund allein der Drehzahldifferenz der Freilauf in die entsprechende Schließposition verbracht wird, wobei dabei auch die Mitnahmeelemente an der Klauenkupplung 10, insbesondere am Ausgangselement eine Position gegenüber dem Eingangselement einnehmen, der eine problemlose Verschiebung beider gegeneinander in axialer Richtung ermöglicht. Dadurch kann mit einfachen Mitteln ein verschleißfreier Schaltvorgang realisiert werden.

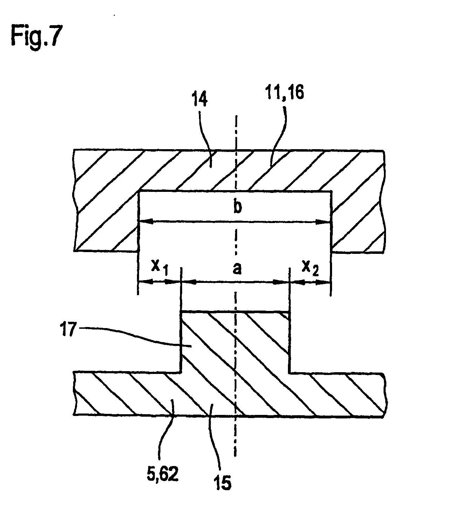

Figur 7 verdeutlicht die Ausgestaltung der Mitnahmeelemente 16 an der Primärradschale 11 bzw. 17 am Sekundärrad 5 bzw. dem mit diesem drehfest gekoppelten Kolben 62 anhand zweier miteinander in Eingriff zu bringenden Mitnahmeelemente mit Spiel zum Ausgleich der Toleranzen im Gesamtsystem Anfahreinheit 2. Dieses Spiel ist in Umfangsrichtung vorgesehen und wird durch die sich in Eingriffsposition ergebenden Spaltweiten x1 und x2 bestimmt, die sich aus der Differenz der Länge der Ausnehmung b am Eingangselement 14 und des Vorsprunges am Ausgangselement 15 ergeben.

### Bezugszeichenliste

- 1: Anfahreinheit
- 2: Anfahrelement
- 3: Hydrodynamische Kupplung
- 4: Primärrad
- 5: Sekundärrad
- 6: Arbeitsraum
- 7: Eingang
- 8: Ausgang
- 9: Überbrückungskupplung
- 10: Klauenkupplung
- 11: Primärradschale
- 12: Zwischenraum
- 13: Innenwand der Primärradschale
- 14: Eingangselement
- 15: Ausgangselement
- 16: Mitnahmeelement
- 17: Mitnahmeelement
- 18: Freilauf
- 19: Gehäuse
- 20.2a, 20.2b: Torsionsschwingungsdämpfer
- 21: Kupplungseingangselement
- 22: Kupplungsausgangselement
- 23: Mittel zur Feder- und Dämpfungskopplung
- 24: Sekundärradwelle
- 25: Profilverbindung
- 26: Profil
- 27: Mittel zum Abbau von Schwingungen
- 28: Element
- 29: Formschlüssige Verbindung
- 31: Drosselstelle
- 32: Vorsprung
- 33: Federpaket
- 34: erster Betriebsmittelführungskanal- oder Raum
- 35: zweiter Betriebsmittelführungskanal- oder Raum
- 36: Betriebsmittelsystem
- 37: Betriebsmittelversorgungsquelle
- 38: Anschluss
- 39: Anschluss
- 40: Mittel zur wahlweisen Änderung der Durchströmungsrichtung
- 41: Ventileinrichtung
- 42: Zulauf
- 43: offener Kreislauf
- 45: klauentragender Teil
- 46: Primärradwelle
- 47: Führung
- 48: Profilverbindung
- 49: Innenumfang
- 50: Außenumfang
- 51: Außenumfang
- 52: Innenumfang
- 53: Profilverbindung
- 54: Betätigungseinrichtung
- 55: Kolbenelement
- 56: Vorsprung
- 57: Ausnehmung
- 58: Steuervorrichtung
- 59: Steuereinrichtung
- 60: Erfassungseinrichtung
- 61: Stelleinrichtung
- 62: Kolben
- 63: Teil
- 64: Profilverbindung
- 65: Zusatzetement
- 66: Antriebsmaschine
- 67: Stelleinrichtung

## Patentansprüche

1. Anfahreinheit (1) für den Einsatz in Getrieben, insbesondere automatischen oder automatisierten Schaltgetrieben für Fahrzeuge;
mit einem Eingang (7) und einem Ausgang (8);
mit einem zwischen Eingang (7) und Ausgang (8) angeordneten Anfahrelement (2) in Form einer hydrodynamischen Kupplung (3), umfassend mindestens ein Primärrad (4) und ein Sekundärrad (5), wobei die hydrodynamische Kupplung (3) frei von einem Leitrad ist;
mit einer Überbrückungskupplung (9) zur mechanischen Durchkopplung zwischen Eingang (7) und Ausgang (8);
die Überbrückungskupplung (9) ist als mechanisch übertragende synchronschaltbare Kupplung (10) ausgeführt;
mit einem Freilauf (18) zwischen dem Primärrad (4) und dem Sekundärrad (5);
**gekennzeichnet durch** das folgende Merkmal:
die Positionierung der Mitnahmeelemente der synchronschaltbaren Kupplung in Umfangsrichtung zueinander und des Freilaufes in Umfangsrichtung erfolgt derart, dass bei Überschreitung des gleichen Verdrehwinkels in Umfangsrichtung die Mitnahmeelemente der synchronschaltbaren Kupplung die Position, welche eine axiale Verschiebung gegeneinander ohne Verschleiß erlaubt, einnehmen und der Freilauf in Sperrstellung überführt wird.

2. Anfahreinheit (1) nach Anspruch 1, **dadurch gekennzeichnet, dass** die mechanisch übertragende synchronschaltbare Kupplung (10) einen in Umfangsrichtung wirkenden Formschluss zwischen dem Eingang (7) oder dem mit diesem direkt oder indirekt drehfest verbundenen Primärrad (4) und dem Ausgang (8) erzeugt.

3. Anfahreinheit (1) nach Anspruch 1 oder 2, **dadurch gekennzeichnet, dass** die mechanisch übertragende synchronschaltbare Kupplung (10) einen Formschluss zwischen dem Primärrad (4) und dem Sekundärrad (5) der hydrodynamischen Kupplung (3) erzeugt.

4. Anfahreinheit (1) nach einem der Ansprüche 1 bis 3, **dadurch gekennzeichnet, dass** die Überbrückungskupplung (9) als Klauenkupplung (10) ausgeführt ist

5. Anfahreinheit (1) nach einem der Ansprüche 1 bis 3, **dadurch gekennzeichnet, dass** die Überbrückungskupplung (9) als Schubriegelkupplung ausgeführt ist.

6. Anfahreinheit (1) nach einem der Ansprüche 1 bis 5, **dadurch gekennzeichnet, dass** der Freilauf (18) in axialer Richtung betrachtet im Bereich der Trennebene (T) zwischen Primärrad (4) und Sekundärrad (5) angeordnet ist.

7. Anfahreinheit (1) nach einem der Ansprüche 1 bis 6, **dadurch gekennzeichnet, dass** der Freilauf (18) in radialer Richtung in einem Bereich, welcher durch eine radiale Abmessung charakterisiert ist, die kleiner als die der Schaufel tragenden Teile von Primärrad (4) und Sekundärrad (5) ist, und in axialer Richtung im Bereich der axialen Erstreckung des Sekundärrades (5) angeordnet ist.

8. Anfahreinheit (1) nach einem der Ansprüche 1 bis 5, **dadurch gekennzeichnet, dass** der Freilauf (18) in axialer Richtung außerhalb des Bereiches der axialen Erstreckung von Primärrad (4) und Sekundärrad (5) angeordnet ist.

9. Anfahreinheit (1) nach einem der Ansprüche 1 bis 8, **dadurch gekennzeichnet, dass** der Freilauf (18) bei Kraftflussrichtung vom Eingang (7) zum Ausgang (8) frei und bei Leistungsübertragung vom Ausgang (8) zum Eingang (7) gesperrt ist.

10. Anfahreinheit (1) nach einem der Ansprüche 1 bis 9, **dadurch gekennzeichnet, dass** das Primärrad (4) der hydrodynamischen Kupplung in axialer Richtung zwischen dem Eingang (7) und dem Ausgang (8) betrachtet räumlich hinter dem Sekundärrad (5) angeordnet ist.

11. Anfahreinheit (1) nach Anspruch 10, **dadurch gekennzeichnet, dass** das Primärrad (4) über eine drehfest mit diesem verbundene Primärradschale (11) mit dem Eingang (7) unter Umschließung der Sekundärrades (5) verbunden ist.

12. Anfahreinheit (1) nach Anspruch 11, **dadurch gekennzeichnet, dass** die Überbrückungskupplung (9) im Zwischenraum, welcher von der Innenwand der Primärradschale (11) und dem Außenumfang des Sekundärrades (5) gebildet wird, angeordnet ist.

13. Anfahreinheit (1) nach Anspruch 12, **dadurch gekennzeichnet, dass** das Eingangselement (14) der synchron schaltbaren Kupplung (10) wenigstens mittelbar drehfest mit der Primärradschale (11) verbunden ist und das Ausgangselement (15) wenigstens mittelbar drehfest mit dem Sekundärrad (5).

14. Anfahreinheit (1) nach Anspruch 13, **dadurch gekennzeichnet, dass** der Kupplungsausgang (15) der synchronschaltbaren Kupplung (10) drehfest mit einem axial gegenüber dem Eingangselement (14) verschieb- oder verschwenkbaren Kolben (62) verbunden ist.

15. Anfahreinheit (1) nach Anspruch 14, **gekennzeichnet durch** die folgenden Merkmale:
der Kolben (62) wird vom Sekundärrad (5) gebildet;
das Sekundärrad (5) ist mit einer Sekundärradwelle (24) drehfest jedoch in axialer Richtung verschiebbar verbunden ist;
das Sekundärrad (5) ist gegenüber dem mit diesem drehfest gekoppelten Teil (63) des Freilaufes (18) in axialer Richtung verschiebbar.

16. Anfahreinheit (1) nach Anspruch 14, **dadurch gekennzeichnet, dass** das Ausgangselement (15) drehfest mit einem Kolben (62), welcher in axialer Richtung verschiebbar oder verschwenkbar am Sekundärrad (5) gelagert ist, verbunden ist.

17. Anfahreinheit (1) nach einem der Ansprüche 1 bis 16, **dadurch gekennzeichnet, dass** das Primärrad (4) in axialer Richtung räumlich vor dem Sekundärrad (5) angeordnet ist

18. Anfahreinheit (1) nach Anspruch 17, **dadurch gekennzeichnet, dass** die Überbrückungskupplung (9) in axialer Richtung räumlich vor der hydrodynamischen Kupplung (3) angeordnet ist.

19. Anfahreinheit (1) nach Anspruch 17, **dadurch gekennzeichnet, dass** die Überbrückungskupplung (9) in axialer Richtung räumlich hinter der hydrodynamischen Kupplung (3) angeordnet ist

20. Anfahreinheit (1) nach Anspruch 19, **dadurch gekennzeichnet, dass** das räumlich in axialer Richtung vordere Schaufelrad - Sekundärrad (5) oder Primärrad (4) - mit einer Welle drehfest verbunden ist, welche sich durch eine das räumlich in axialer Richtung hintere Schaufelrad - Primärrad (4) oder Sekundärrad (5) - tragende Hohlwelle erstreckt.

21. Anfahreinheit (1) nach Anspruch 20, **dadurch gekennzeichnet, dass** die Überbrückungskupplung (9) zwischen der Welle und der Hohlwelle angeordnet ist.

22. Anfahreinheit (1) nach einem der Ansprüche 1 bis 21, **dadurch gekennzeichnet, dass** Mittel (27) zum Abbau von Schwingungen vorgesehen sind.

23. Anfahreinheit (1) nach Anspruch 22, **dadurch gekennzeichnet, dass** die Mittel (27) zum Abbau von Schwingungen einen Torsionsschwingungsdämpfer (20.2d) umfassen, der der Oberbrückungskupplung (9) vorgeschaltet ist

24. Anfahreinheit (1) nach Anspruch 22 oder 23, **dadurch gekennzeichnet, daß** die Mittel (27) zum Abbau von Schwingungen einen Torsionsschwingungsdämpfer (20.2d) umfassen, der der hydrodynamischen Kupplung (3) vorgeschaltet ist

25. Anfahreinheit (1) nach Anspruch 22, **dadurch gekennzeichnet, dass** die Mittel (27) zum Abbau von Schwingungen einen Torsionsschwingungsdämpfer (20.2d) umfassen, der der Überbrückungskupplung (9) nachgeschaltet ist

26. Anfahreinheit (1) nach Anspruch 22 oder 25, **dadurch gekennzeichnet, daß** die Mittel (27) zum Abbau von Schwingungen einen Torsionsschwingungsdämpfer (20.2d) umfassen, der der hydrodynamischen Kupplung (3) nachgeschaltet ist

27. Getriebebaueinheit mit einer Anfahreinheit gemäß einem der Ansprüche 1 bis 26.

28. Getriebebaueinheit gemäß Anspruch 27, **gekennzeichnet durch** die folgenden Merkmale:
mit einem Getriebegehäuse;
mit der Anfahreinheit (1) nachgeordneten Schaltstufen;
die Anfahreinheit (1) ist im Getriebegehäuse integriert.

29. Getriebebaueinheit gemäß Anspruch 27, **gekennzeichnet durch** die folgenden Merkmale:
mit der Anfahreinheit (1) nachgeordneten Schaltstufen und einem den Schaltstufen zugeordneten Gehäuseteil;
die Anfahreinheit (1) weist ein eigenes Gehäuse auf und ist am die Nachschaltstufe umschließenden Gehäuseteil angeflanscht;
der Ausgang (8) der Anfahreinheit (1) ist drehfest mit dem Antrieb der Nachschaltstufen verbunden.

30. Getriebebaueinheit nach einem der Ansprüche 27 bis 29, **dadurch gekennzeichnet, dass** diese ein automatisiertes Schaltgetriebe ist.

31. Getriebebaueinheit nach einem der Ansprüche 27 bis 29, **dadurch gekennzeichnet, dass** dieses ein Automatgetriebe ist.

## Claims

1. A starting unit (1) for use in gearboxes, especially automatic or semi-automatic gearboxes in vehicles, comprising an input (7) and an output (8), a starting element (2) in the form of a hydrodynamic coupling (3) arranged between the input (7) and the output (8), comprising at least one primary wheel (4) and a secondary wheel (5), with the hydrodynamic coupling (3) being free from a guide wheel, a lock-up clutch (9) for mechanically coupling through between the input (7) and the output (8), with the lock-up clutch (9) being arranged as a mechanically controlled synchronized clutch (10), with a freewheel (18) between the primary wheel (4) and the secondary wheel (5), **characterized by** the following feature:
the positioning of the driver elements of the synchronized clutch in the circumferential direction towards each other and the freewheel in the circumferential direction occurs in such a way that upon exceeding the same twisting angle in the circumferential direction the driver elements of the synchronized clutch assume the position which allows an axial displacement against each other without any wear and tear and the freewheel is moved to the locked position.

2. A starting unit (1) according to claim 1, **characterized in that** the mechanically controlled synchronized clutch (10) produces a positive connection acting in the circumferential direction between the input (7) or the primary wheel (4) which is connected with the same in a torsionally rigid manner either directly or indirectly and the output (8).

3. A starting unit (1) according to claim 1 or 2, **characterized in that** the mechanically controlled synchronized clutch (10) produces a positive connection between the primary wheel (4) and the secondary wheel (5) of the hydrodynamic coupling (3).

4. A starting unit (1) according to one of the claims 1 to 3, **characterized in that** the lock-up clutch (9) is arranged as a claw clutch (10).

5. A starting unit (1) according to one of the claims 1 to 3, **characterized in that** the lock-up clutch (9) is arranged as a slide-bolt clutch.

6. A starting unit (1) according to one of the claims 1 to 5, **characterized in that** the freewheel (18) is arranged in the region of the parting plane (T) between primary wheel (4) and secondary wheel (5) when viewed in the axial direction.

7. A starting unit (1) according to one of the claims 1 to 6, **characterized in that** the freewheel (18) is arranged in the radial direction in a region which is **characterized by** the radial dimension which is smaller than the parts of primary wheel (4) and secondary wheel (5) which carry the blades and in the axial direction in the region of the axial extension of the secondary wheel (5).

8. A starting unit (1) according to one of the claims 1 to 5, **characterized in that** in the axial direction the freewheel (18) is arranged outside of the area of the extension of primary wheel (4) and secondary wheel (5).

9. A starting unit (1) according to one of the claims 1 to 8, **characterized in that** the freewheel (18) is free in the direction of power flow from input (7) to output (8) and is blocked in the case of power transmission from output (8) to input (7).

10. A starting unit (1) according to one of the claims 1 to 9, **characterized in that** the primary wheel (4) of the hydrodynamic coupling is arranged from a spatial standpoint behind the secondary wheel (5), when seen in the axial direction between the input (7) and the output (8).

11. A starting unit (1) according to claim 10, **characterized in that** the primary wheel (4) is connected with the input (7) by enclosing the secondary wheel (5) by means of a primary wheel shell (11) which is connected in a torsionally rigid manner with said primary wheel.

12. A starting unit (1) according to claim 11, **characterized in that** the lock-up clutch (9) is arranged in the cavity which is formed by the inside wall of the primary wheel shell (11) and the outside circumference of the secondary wheel (5).

13. A starting unit (1) according to claim 12, **characterized in that** the input element (14) of the synchronized clutch (10) is connected with the primary wheel shell (11) at least indirectly in a torsionally rigid manner and the output element (15) with the secondary wheel (5) at least indirectly in a torsionally rigid manner.

14. A starting unit (1) according to claim 13, **characterized in that** the clutch output (15) of the synchronized clutch (10) is connected in a torsionally rigid manner with a piston (62) which is axially displaceable or swivelable relative to the input element (14).

15. A starting unit (1) according to claim 14, **characterized by** the following features:
the piston (62) is formed by the secondary wheel (5), the secondary wheel (5) is connected with a secondary wheel shaft (24) in a torsionally rigid manner, but displaceable in the axial direction, and the secondary wheel (5) is displaceable in the axial direction relative to the portion (63) of the freewheel (18) which is connected with the same in a torsionally rigid manner.

16. A starting unit (1) according to claim 14, **characterized in that** the output element (15) is connected in a torsionally rigid manner with a piston (62) which is held displaceable or swivelable on the secondary wheel (5) in the axial direction.

17. A starting unit (1) according to one of the claims 1 to 16, **characterized in that** the primary wheel (4) is arranged in a spatial respect in the axial direction before the secondary wheel (5).

18. A starting unit (1) according to claim 17, **characterized in that** the lock-up clutch (9) is arranged in a spatial respect in the axial direction before the hydrodynamic coupling (3).

19. A starting unit (1) according to claim 17, **characterized in that** the lock-up clutch (9) is arranged in a spatial respect in the axial direction behind the hydrodynamic coupling (3).

20. A starting unit (1) according to claim 19, **characterized in that** the blade wheel which is the front one in a spatial respect in the axial direction, either the secondary wheel (5) or the primary wheel (4), is connected in a torsionally rigid manner with a shaft which extends through a hollow shaft which carries the blade wheel which is the rear one spatially in the axial direction, either the primary wheel (4) or the secondary wheel (5).

21. A starting unit (1) according to claim 20, **characterized in that** the lock-up clutch (9) is arranged between shaft and hollow shaft.

22. A starting unit (1) according to one of the claims 1 to 21, **characterized in that** means (27) are provided for reducing oscillations.

23. A starting unit (1) according to claim 22, **characterized in that** the means (27) for reducing oscillations comprise a torsion vibration damper (20.2d) which is arranged upstream of a lock-up clutch (9).

24. A starting unit (1) according to claim 22 or 23, **characterized in that** the means (27) for reducing oscillations comprise a torsion vibration damper (20.2d) which is arranged upstream of the hydrodynamic coupling (3).

25. A starting unit (1) according to claim 22, **characterized in that** the means (27) for reducing oscillations comprise a torsion vibration damper (20.2d) which is arranged downstream of the lock-up clutch (9).

26. A starting unit (1) according to claim 22 or 25, **characterized in that** the means (27) for reducing oscillations comprise a torsion vibration damper (20.2d) which is arranged downstream of the hydrodynamic coupling (3).

27. A transmission module with a starting unit according to one of the claims 1 to 26.

28. A transmission module according to claim 27, **characterized by** the following features:
with a gearbox housing, gear steps arranged downstream of the starting unit (1), and the starting unit (1) being integrated in the gearbox housing.

29. A transmission module according to claim 27, **characterized by** the following features:
with gear steps arranged downstream of the starting unit (1) and a housing part associated with the gear steps, the starting unit (1) having a separate housing and being flange-mounted on the housing part enclosing the rear-mounted step, and the output (9) of the starting unit (1) being connected in a torsionally rigid manner with the drive of the rear-mounted steps.

30. A transmission module according to one of the claims 27 to 29, **characterized in that** the same is a semi-automatic gearbox.

31. A transmission module according to one of the claims 27 to 29, **characterized in that** the same is an automatic gearbox.

## Revendications

1. Unité de démarreur (1) destinée à être utilisée dans des boîtes de vitesses, en particulier des boîtes de vitesses automatiques ou automatisées pour des véhicules,
avec une entrée (7) et une sortie (8) ;
avec un élément de démarrage (2) disposé entre l'entrée (7) et la sortie (8) et prenant la forme d'un accouplement hydrodynamique (3), comprenant au moins une roue primaire (4) et une roue secondaire (5), lequel accouplement hydrodynamique (3) n'est pas associé à une roue directrice ; avec un convertisseur de couple à verrouillage (9) pour la transmission mécanique entre l'entrée (7) et la sortie (8) ;
le convertisseur de couple à verrouillage (9) est construit comme un embrayage synchronisé (10) à transmission mécanique ;
avec une roue libre (18) entre la roue primaire (4) et la roue secondaire (5) ; **caractérisée en ce que** le positionnement des éléments entraîneurs de l'embrayage synchronisé les uns par rapport aux autres dans le sens de la circonférence et de la roue libre dans le sens de la circonférence est tel que lorsque le même angle de rotation est dépassé dans le sens de la circonférence, les éléments entraîneurs de l'embrayage synchronisé prennent la position qui permet une translation axiale les uns par rapport aux autres sans usure et la roue libre passe dans la position de verrouillage.

2. Unité de démarreur (1) selon la revendication 1, **caractérisée en ce que** l'embrayage synchronisé (10) à transmission mécanique crée un engagement en correspondance de forme agissant dans le sens de la circonférence entre l'entrée (7) ou la roue primaire (4) reliée à celle-ci de manière directement ou indirectement solidaire en rotation et la sortie (8).

3. Unité de démarreur (1) selon la revendication 1 ou 2, **caractérisée en ce que** l'embrayage synchronisé (10) à transmission mécanique crée un engagement en correspondance de forme entre la roue primaire (4) et la roue secondaire (5) de l'accouplement hydrodynamique (3).

4. Unité de démarreur (1) selon l'une des revendications 1 à 3, **caractérisée en ce que** le convertisseur de couple à verrouillage (9) est réalisé comme un accouplement à griffes (10).

5. Unité de démarreur (1) selon l'une des revendications 1 à 3, **caractérisée en ce que** le convertisseur de couple à verrouillage (9) est réalisé comme un accouplement à targette.

6. Unité de démarreur (1) selon l'une des revendications 1 à 5, **caractérisée en ce que** la roue libre (18) est disposée, vue dans le sens axial, au niveau du plan de séparation (T) entre la roue primaire (4) et la roue secondaire (5).

7. Unité de démarreur (1) selon l'une des revendications 1 à 8, **caractérisée en ce que** la roue libre (18) est disposée dans le sens radial dans une zone **caractérisée par** une dimension radiale plus petite que celle des parties portant les pales de la roue primaire (4) et de la roue secondaire (5), et dans le sens axial au niveau de l'étendue axiale de la roue secondaire (5).

8. Unité de démarreur (1) selon l'une des revendications 1 à 5, **caractérisée en ce que** la roue libre (18) est disposée dans le sens axial en dehors de la zone d'extension axiale de la roue primaire (4) et de la roue secondaire (5).

9. Unité de démarreur (1) selon l'une des revendications 1 à 8, **caractérisée en ce que** la roue libre (18) est libre lorsque l'écoulement de la force va de l'entrée (7) vers la sortie (8) et bloquée lorsque la puissance est transmise de la sortie (8) vers l'entrée (7).

10. Unité de démarreur (1) selon l'une des revendications 1 à 9, **caractérisée en ce que** la roue primaire (4) de l'accouplement hydrodynamique est disposée dans l'espace, vue dans le sens axial, entre l'entrée (7) et la sortie (8), derrière la roue secondaire (5).

11. Unité de démarreur (1) selon la revendication 10, **caractérisée en ce que** la roue primaire (4) ou la coque de roue primaire (11) reliée à celle-ci de manière solidaire en rotation est reliée à l'entrée (7) en entourant la roue secondaire (5).

12. Unité de démarreur (1) selon la revendication 11, **caractérisée en ce que** le convertisseur de couple à verrouillage (9) est disposé dans l'espace formé entre la paroi intérieure de la coque de roue primaire (11) et la circonférence extérieure de la roue secondaire (5).

13. Unité de démarreur (1) selon la revendication 12, **caractérisée en ce que** l'élément d'entrée (14) de l'embrayage synchronisé (10) est relié au moins indirectement de manière solidaire en rotation avec la coque de roue primaire (11) et l'élément de sortie (15) au moins indirectement de manière solidaire en rotation avec la roue secondaire (5).

14. Unité de démarreur (1) selon la revendication 13, **caractérisée en ce que** la sortie d'accouplement (15) de l'embrayage synchronisé (10) est reliée de manière solidaire en rotation avec un piston (62) capable de translation ou de basculement dans le sens axial par rapport à l'élément d'entrée (14).

15. Unité de démarreur (1) selon la revendication 14, **caractérisée en ce que** :
le piston (62) est formé par la roue secondaire (5) ;
la roue secondaire (5) est reliée à l'arbre de la roue secondaire (24) de manière solidaire en rotation mais mobile dans le sens axial ;
la roue secondaire (5) est mobile dans le sens axial par rapport à la partie (63) de la roue libre (18) qui est couplée avec elle de manière solidaire en rotation.

16. Unité de démarreur (1) selon la revendication 14, **caractérisée en ce que** l'élément de sortie (15) est relié de manière solidaire en rotation à un piston (62) qui est supporté avec possibilité de translation ou de basculement dans le sens axial sur la roue secondaire (5).

17. Unité de démarreur (1) selon l'une des revendications 1 à 16, **caractérisée en ce que** la roue primaire (4) est disposée dans l'espace, dans le sens axial, devant la roue secondaire (5).

18. Unité de démarreur (1) selon la revendication 17, **caractérisée en ce que** le convertisseur de couple à verrouillage (9) est disposé dans l'espace, dans le sens axial, devant l'accouplement hydrodynamique (3).

19. Unité de démarreur (1) selon la revendication 17, **caractérisée en ce que** le convertisseur de couple à verrouillage (9) est disposé dans l'espace, dans le sens axial, derrière l'accouplement hydrodynamique (3).

20. Unité de démarreur (1) selon la revendication 19, **caractérisée en ce que** la roue à aubes disposée en avant dans l'espace dans le sens axial, roue secondaire (5) ou roue primaire (4), est reliée de manière solidaire en rotation à un arbre qui s'étend à travers un arbre creux portant la roue à aubes disposée en arrière dans l'espace dans le sens axial, roue primaire (4) ou roue secondaire (5).

21. Unité de démarreur (1) selon la revendication 20, **caractérisée en ce que** le convertisseur de couple à verrouillage (9) est disposé entre l'arbre et l'arbre creux.

22. Unité de démarreur (1) selon l'une des revendications 1 à 21, **caractérisée en ce que** des moyens (27) sont prévus pour supprimer les vibrations.

23. Unité de démarreur (1) selon la revendication 22, **caractérisée en ce que** les moyens (27) pour supprimer les vibrations comprennent un amortisseur de vibrations à torsion (20.2d) qui est monté en amont du convertisseur de couple à verrouillage (9).

24. Unité de démarreur (1) selon la revendication 22 ou 23, **caractérisée en ce que** les moyens (27) pour supprimer les vibrations comprennent un amortisseur de vibrations à torsion (20.2d) qui est monté en amont de l'accouplement hydrodynamique (3).

25. Unité de démarreur (1) selon la revendication 22, **caractérisée en ce que** les moyens (27) pour supprimer les vibrations comprennent un amortisseur de vibrations à torsion (20.2d) qui est monté en aval du convertisseur de couple à verrouillage (9).

26. Unité de démarreur (1) selon la revendication 22 ou 25, **caractérisée en ce que** les moyens (27) pour supprimer les vibrations comprennent un amortisseur de vibrations à torsion (20.2d) qui est monté en aval de l'accouplement hydrodynamique (3).

27. Unité de boîte de vitesses avec une unité de démarreur selon l'une des revendications 1 à 26.

28. Unité de boîte de vitesses selon la revendication 27, **caractérisée en ce qu'**elle comporte :
un carter de boîte de vitesses ;
des étages de rapports disposés en aval de l'unité de démarreur (1) ; l'unité de démarreur (1) est intégrée dans le carter de boîte de vitesses.

29. Unité de boîte de vitesses selon la revendication 27, **caractérisée en ce que** :
elle comporte des étages de rapports disposés en aval de l'unité de démarreur (1) et une partie de carter associé à l'un des étages de rapport ; l'unité de démarreur (1) possède son propre carter et elle est fixée par une bride sur la partie de carter entourant l'étage de rapport d'aval ;
la sortie (8) de l'unité de démarreur (1) est reliée de manière solidaire en rotation à l'entraînement des étages de rapport d'aval.

30. Unité de boîte de vitesses selon l'une des revendications 27 à 29, **caractérisée en ce qu'**il s'agit d'une boîte de vitesses automatisée.

31. Unité de boîte de vitesses selon l'une des revendications 27 à 29, **caractérisée en ce qu'**il s'agit d'une boîte de vitesses automatique.
